# EUROPEAN PATENT APPLICATION

(11) **EP 4 654 649 A1**
(43) Date of publication of application: **26.11.2025**
(21) Application number: 24756099.8
(22) Date of filing: 05.02.2024
(51) Int. Cl.: H04W 24/02

(54) **COMMUNICATION METHOD AND APPARATUS**

(30) Priority: 14.02.2023 CN 202310156229
(71) Applicant: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN); NI, Hui, Shenzhen, Guangdong 518129 (CN)
(74) Representative: Epping - Hermann - Fischer
(86) International application number: PCT/CN2024/075964
(87) International publication number: WO 2024/169725

(57) **Abstract**

This application provides a communication method and apparatus. First information for determining redundancy of a PDU set by an access network device may be carried in a data packet belonging to a protocol data unit set, that is, the first information is carried in the data packet. This enables dynamic determination of the redundancy of the PDU set, allowing for more flexible adaptation to redundancy determination in a wider range of scenarios, and also saves resources required for transmitting the first information. In addition, the access network device may send some data packets in a plurality of data packets based on the redundancy of the PDU set, thereby saving air interface resources.

## Description

This application claims priority to Chinese Patent Application No. 202310156229.3, filed with the China National Intellectual Property Administration on February 14, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Generally, when transmitting original data packets of a service flow, an application server may add redundant packets to the original packets, so that when some of the original packets in the service flow are lost, the lost packets can be recovered based on the redundant packets, thereby improving the reliability of service data transmission. Currently, in scenarios where the degree of redundancy is the same for different service flows, the application server can interact with a core network to send a ratio of redundant packets to original packets within the service flow (also referred to as redundancy of packets within the service flow) in advance to an access network device, so that the access network device can transmit the packets within the service flow according to the redundancy when obtaining the data packets in the service flow. However, this method, in which the access network device is notified of the redundancy in advance, can only adapt to scenarios where the redundancy within the service flow remains fixed and unchanged. It is not flexible enough and cannot be applied to real-world scenarios where the redundancy can change dynamically.

### SUMMARY

This application provides a communication method and apparatus, to dynamically determine redundancy in a service flow and dynamically perform transmission scheduling optimization processing based on dynamic changes of the redundancy, thereby offering greater flexibility.

According to a first aspect, a communication method is provided, including: An access network device receives a plurality of data packets belonging to a protocol data unit (protocol data unit, PDU) set (set), where a first protocol layer header of at least one data packet in the plurality of data packets includes first information, and the first information is for determining redundancy of the PDU set by the access network device; and the access network device sends M data packets in the plurality of data packets, where M is determined based on the redundancy of the PDU set. It can be learned that, the first information for determining the redundancy of the PDU set by the access network device is carried in the data packet belonging to a protocol data unit set, that is, the first information is carried in the data packet. This implements dynamical determining of the redundancy of the PDU set, can be more flexibly applicable to determining of redundancies in more scenarios, and can also save resources for transmission of the first information. In addition, the access network device may send some data packets in the plurality of data packets with reference to the redundancy of the PDU set, and does not need to send all the data packets in the PDU set, to save air interface resources.

In this application, the PDU set indicates a basic data unit for performing processing for a service (for example, encoding processing and/or decoding processing for a media service) at a service layer. For example, the media service may be a video service, for example, a virtual reality (virtual reality, VR) service, an augmented reality (augmented reality, AR) service, a mixed reality (mixed reality, MR) service, a cloud game service, or a live streaming (for example, live streaming of a sports event or live streaming of a sale) program. Alternatively, the media service may be an audio service or the like. This is not limited in this application.

The plurality of data packets belonging to the PDU set may include at least one original data packet, and may also include at least one redundant data packet. The redundant data packet may be obtained by encoding the original data packet in the PDU set by an application server. For example, the redundant data packet may be obtained by performing forward error correction (forward error correction, FEC) coding on the original data packet by the application server.

In this application, the redundancy of the PDU set may be determined based on a quantity of redundant data packets in the PDU set and a total quantity of data packets in the PDU set. For example, the redundancy of the PDU set is a ratio of the quantity of redundant data packets in the PDU set to the total quantity of data packets in the PDU set.

Optionally, a first protocol layer may be, for example, a general packet radio service tunneling protocol (general packet radio service tunneling protocol, GTP-U) layer. In a possible implementation, the first protocol layer header may also be understood as an extension of the first protocol layer header.

With reference to the first aspect, in a possible implementation, the first information includes an identifier of a type of the data packet, and the type of the data packet includes an original data packet and/or a redundant data packet; and the method further includes: The access network device determines a quantity of redundant data packets in the PDU set and a total quantity of the data packets in the PDU set based on first information included in a data packet in the PDU set; and the access network device determines the redundancy of the PDU set based on the quantity of redundant data packets in the PDU set and the total quantity of the data packets in the PDU set. This indicates that the access network device may determine the redundancy of the PDU set, so that the access network device may send some data packets in the plurality of data packets with reference to the redundancy of the PDU set. This ensures service experience, and also saves air interface resources.

With reference to the first aspect, in a possible implementation, the first information is the redundancy of the PDU set. This indicates that the access network device does not need to additionally determine the redundancy of the PDU set, and directly performs data packet transmission optimization based on the redundancy of the PDU set in the first information, to simplify logic on an access network device side and improve efficiency.

With reference to the first aspect, in a possible implementation, the method further includes: The access network device obtains a first correspondence between a type of the PDU set and the redundancy of the PDU set. The first correspondence may be, for example, predefined or preconfigured, or the first correspondence may be, for example, indicated by a session management network element to the access network device. This ensures that the access network device can determine the redundancy of the PDU set based on the first correspondence.

In this application, the type of the PDU set may include, for example, PDU sets of different importance degrees, for example, an independently decoded frame and a non-independently decoded frame, where an importance degree of the independently decoded frame is higher than an importance degree of the non-independently decoded frame; and for another example, a key media frame and a discardable media frame, where an importance degree of the key media frame is higher than an importance degree of the discardable media frame.

With reference to the first aspect, in a possible implementation, the first information includes the type of the PDU set; and the method further includes: The access network device determines the redundancy of the PDU set based on the first correspondence and the type of the PDU set. This indicates that the access network device may determine the redundancy of the PDU set based on the type of PDU set, so that the access network device may send some data packets in the plurality of data packets with reference to the redundancy of the PDU set. This ensures service experience, and also saves air interface resources.

With reference to the first aspect, in a possible implementation, the method further includes: The access network device obtains a second correspondence between an identifier of a quality of service (quality of service, QoS) flow and the redundancy of the PDU set. The second correspondence may be, for example, predefined or preconfigured, or the second correspondence may be, for example, indicated by a session management network element to the access network device. This ensures that the access network device can determine the redundancy of the PDU set based on the second correspondence.

In this application, the identifier of the QoS flow is for identifying a QoS flow in a data connection session. For example, the identifier of the QoS flow is a QoS flow identifier (QoS flow identifier, QFI). The data connection session is an association (association) between a terminal device and a user plane network element, and is for providing a connection service for communication between the terminal device and an accessed network or between the terminal device and another terminal device. A creation process of the data connection session may be initiated by the terminal device, or may be initiated by another network device. In embodiments of this application, the data connection session is also sometimes referred to as a "data session" or a "session" for short.

In a possible implementation, the data connection session may be a PDU session, or may be a session in another form. This is not limited in embodiments of this application.

With reference to the first aspect, in a possible implementation, the first information includes the identifier of the QoS flow; and the method further includes: The access network device determines the redundancy of the PDU set based on the second correspondence and the identifier of the QoS flow. This indicates that the access network device may determine the redundancy of the PDU set, so that the access network device may send some data packets in the plurality of data packets with reference to the redundancy of the PDU set. This ensures service experience, and also saves air interface resources.

With reference to the first aspect, in a possible implementation, the method further includes: The access network device receives first indication information from a session management network element, where the first indication information indicates the access network device to determine the redundancy of the PDU set based on a first protocol layer header of a data packet from a user plane network element. In this way, the access network device can learn that the redundancy of the PDU set needs to be determined, and perform transmission scheduling optimization with reference to the redundancy of the PDU set.

With reference to the first aspect, in a possible implementation, the method further includes: The access network device determines configuration information of a data radio bearer (data radio bearer, DRB) based on the redundancy of the PDU set, where the DRB is for bearing the M data packets; and that the access network device sends the M data packets includes: The access network device sends the M data packets based on the configuration information of the DRB. This indicates that the access network device can reduce a transmission amount of data packets, so that air interface resources can be saved.

In this application, for example, the configuration information of the DRB may include at least one of the following: a packet loss rate (packet error rate, PER), a packet delay budget (packet delay budget, PDB), a PDU set processing rule, and the like. The PDU set processing rule indicates to perform transmission of the PDU set in the DRB based on the redundancy of the PDU set, that is, it is ensured that transmission of a specific proportion of data packets in the PDU set succeeds in data transmission through the DRB. For example, the access network device sends the M data packets in the PDU set.

With reference to the first aspect, in a possible implementation, the method further includes: The access network device discards a data packet other than the M data packets in the PDU set when the M data packets are successfully transmitted. This can save air interface resources, and can also increase an air interface capacity.

According to a second aspect, a communication method is provided, including: A user plane network element receives a plurality of data packets belonging to a PDU set; and the user plane network element adds first information to a first protocol layer header of at least one data packet in the plurality of data packets, and sends the plurality of data packets to an access network device, where the first information is for determining redundancy of the PDU set.

With reference to the second aspect, in a possible implementation, a second protocol layer header of at least one data packet in the plurality of data packets is for determining a type of the data packet. For example, the second protocol layer header includes an identifier of the type of the data packet. The first information includes the identifier of the type of the data packet, and the type of the data packet includes an original data packet and/or a redundant data packet.

Optionally, a second protocol layer may be, for example, an application transport layer, and a protocol supported by the application transport layer may be, for example, a real-time transport protocol (real-time transport protocol, RTP). In a possible implementation, the second protocol layer header may also be understood as an extension of the second protocol layer header.

With reference to the second aspect, in a possible implementation, a second protocol layer header of at least one data packet in the plurality of data packets is for determining a type of the PDU set. For example, the second protocol layer header includes the type of the PDU set. The method further includes: The user plane network element obtains a first correspondence between the type of the PDU set and the redundancy of the PDU set; and the user plane network element determines the redundancy of the PDU set based on the first correspondence and the type of the PDU set. The first correspondence may be, for example, predefined or preconfigured, or the first correspondence may be, for example, indicated by a session management network element to the user plane network element. In this way, the user plane network element may determine the redundancy of the PDU set based on the first correspondence and the type of the PDU set.

With reference to the second aspect, in a possible implementation, the first information is the redundancy of the PDU set. To be specific, after determining the redundancy of the PDU set, the user plane network element directly uses the redundancy of the PDU set as the first information and adds the first information to the first protocol layer header of the at least one data packet in the plurality of data packets.

With reference to the second aspect, in a possible implementation, the first information includes an identifier of a QoS flow; and the method further includes: The user plane network element obtains a second correspondence between the identifier of the QoS flow and the redundancy of the PDU set; and the user plane network element determines the identifier of the QoS flow based on the second correspondence and the redundancy of the PDU set. The second correspondence may be, for example, predefined or preconfigured, or the second correspondence may be, for example, indicated by a session management network element to the user plane network element. In this way, the user plane network element may determine the identifier of the QoS flow based on the second correspondence and the redundancy of the PDU set, which may also be understood that the user plane network element maps the PDU set to the corresponding QoS flow based on the redundancy of the PDU set.

With reference to the second aspect, in a possible implementation, a second protocol layer header of at least one data packet in the plurality of data packets is for determining a type of the PDU set, and the first information includes the type of the PDU set.

With reference to the second aspect, in a possible implementation, the method further includes: The user plane network element receives second indication information from a session management network element, where the second indication information indicates the user plane network element to add the first information to a first protocol layer header of a data packet from an application server. This ensures that the user plane network element adds the first information to the first protocol layer header of the data packet from the application server, to establish a prerequisite for an access network device side to perform transmission optimization based on a redundant PDU set.

With reference to the second aspect, in a possible implementation, that the second indication information indicates the user plane network element to add the first information to the first protocol layer header of the data packet from the application server includes: The second indication information indicates the user plane network element to add the first information to the first protocol layer header of the data packet based on a second protocol layer header of a data packet from the application server. For example, the first information includes the identifier of the type of the data packet, and the second indication information indicates the user plane network element to add the first information to the first protocol layer header of the data packet based on a type of the data packet from the application server. Alternatively, the first information is the type of the PDU set, and the second indication information indicates the user plane network element to add the first information to the first protocol layer header of the data packet based on a type of a PDU set to which the data packet from the application server belongs. Alternatively, the first information is the redundancy of the PDU set, and the second indication information indicates the user plane network element to add the first information to the first protocol layer header of the data packet based on a type of a PDU set to which the data packet from the application server belongs and the first correspondence. Alternatively, the first information is the QoS identifier, and the second indication information indicates the user plane network element to add the first information to the first protocol layer header of the data packet based on a type of a PDU set to which the data packet from the application server belongs and the second correspondence.

According to a third aspect, a communication method is provided, including: A policy control network element generates a policy and charging control (policy and charging control, PCC) rule, where the PCC rule indicates an access network device to determine redundancy of a PDU set based on a first protocol layer header of a data packet from a user plane network element; and the policy control network element sends the PCC rule to a session management network element. In this way, the session management network element may obtain the PCC rule, to ensure that the access network device can learn, from the session management network element, that the redundancy of the PDU set needs to be determined.

With reference to the third aspect, in a possible implementation, the PCC rule further indicates the user plane network element to add first information to a first protocol layer header of a data packet from an application server, where the first information includes an identifier of a type of the data packet, and the type of the data packet includes an original data packet and/or a redundant data packet; or the first information includes redundancy of a PDU set to which the data packet belongs; or the first information includes a type of a PDU set to which the data packet belongs; or the first information is a QoS identifier. This indicates that the user plane network element may add the first information to the first protocol layer header of the data packet from the application server.

With reference to the third aspect, in a possible implementation, that the PCC rule indicates the user plane network element to add the first information to the first protocol layer header of the data packet from the application server includes: The PCC rule indicates the user plane network element to add the first information to the first protocol layer header of the data packet based on a second protocol layer header of a data packet from the application server. For example, the first information includes the identifier of the type of the data packet, and the PCC rule indicates the user plane network element to add the first information to the first protocol layer header of the data packet based on a type of the data packet from the application server. Alternatively, the first information is the type of the PDU set, and the PCC rule indicates the user plane network element to add the first information to the first protocol layer header of the data packet based on a type of a PDU set to which the data packet from the application server belongs. Alternatively, the first information is the redundancy of the PDU set, and the PCC rule indicates the user plane network element to add the first information to the first protocol layer header of the data packet based on a type of a PDU set to which the data packet from the application server belongs and a first correspondence. Alternatively, the first information is the QoS identifier, and the PCC rule indicates the user plane network element to add the first information to the first protocol layer header of the data packet based on a type of a PDU set to which the data packet from the application server belongs and the first correspondence.

With reference to the third aspect, in a possible implementation, that the policy control network element generates the PCC rule includes: The policy control network element receives second information from an application function network element, where the second information indicates the access network device to determine the redundancy of the PDU set based on the first protocol layer header of the data packet from the user plane network element; and the policy control network element generates the PCC rule based on the second information.

According to a fourth aspect, a communication method is provided, including: A session management network element receives a PCC rule from a policy control network element, where the PCC rule indicates an access network device to determine redundancy of a PDU set based on a first protocol layer header of a data packet from a user plane network element; and the session management network element sends first indication information according to the PCC rule, where the first indication information indicates the access network device to determine the redundancy of the PDU set based on the first protocol layer header of the data packet from the user plane network element.

With reference to the fourth aspect, in a possible implementation, the PCC rule further indicates the user plane network element to add first information to a first protocol layer header of a data packet from an application server, where the first information includes an identifier of a type of the data packet, and the type of the data packet includes an original data packet and/or a redundant data packet; or the first information includes redundancy of a PDU set to which the data packet belongs; or the first information includes a type of a PDU set to which the data packet belongs; or the first information is a QoS identifier.

With reference to the fourth aspect, in a possible implementation, that the PCC rule indicates the user plane network element to add the first information to the first protocol layer header of the data packet from the application server includes: The PCC rule indicates the user plane network element to add the first information to the first protocol layer header of the data packet based on a second protocol layer header of a data packet from the application server.

With reference to the fourth aspect, in a possible implementation, the method further includes: The session management network element sends second indication information according to the PCC rule, where the second indication information indicates the user plane network element to add the first information to the first protocol layer header of the data packet from the application server.

With reference to the fourth aspect, in a possible implementation, that the second indication information indicates the user plane network element to add the first information to the first protocol layer header of the data packet from the application server includes: The second indication information indicates the user plane network element to add the first information to the first protocol layer header of the data packet based on a second protocol layer header of a data packet from the application server.

According to a fifth aspect, a communication method is provided. The method includes the method according to any one of the first aspect and the method according to any one of the second aspect. With reference to the fifth aspect, in a possible implementation, the method further includes the method according to any one of the third aspect and the method according to any one of the fourth aspect.

According to a sixth aspect, a communication apparatus is provided. The communication apparatus includes a module configured to perform the method according to any one of the first aspect to the fourth aspect.

According to a seventh aspect, a communication apparatus is provided, including a processor. The processor is coupled to a memory, and the memory stores a computer program. The processor is configured to invoke the computer program in the memory, to cause the communication apparatus to perform the method according to any one of the first aspect to the fourth aspect.

According to an eighth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method according to any one of the first aspect to the fourth aspect by using a logic circuit or by executing code instructions. According to a ninth aspect, a computer-readable storage medium is provided. The storage medium stores a computer program or instructions. When the computer program or the instructions are executed by a computer, the method according to any one of the first aspect to the fourth aspect is implemented.

According to a tenth aspect, a computer program product is provided. When a computer reads and executes the computer program product, the computer is caused to perform the method according to any one of the first aspect to the fourth aspect.

According to an eleventh aspect, a communication system is provided, including an access network device configured to perform the method according to any one of the first aspect and a user plane network element configured to perform the method according to any one of the second aspect.

With reference to the eleventh aspect, in a possible implementation, the communication system may further include a policy control network element configured to perform the method according to any one of the third aspect and a session management network element configured to perform the method according to any one of the fourth aspect.

### BRIEF DESCRIPTION OF DRAWINGS

The following briefly describes accompanying drawings used in describing embodiments.
FIG. 1 is a diagram of a structure of a communication system;
FIG. 2 is a diagram of a hardware structure applicable to a communication apparatus according to an embodiment of this application;
FIG. 3 is a schematic flowchart of a communication method according to an embodiment of this application;
FIG. 4 is a diagram of a structure of a data packet;
FIG. 5 is a schematic flowchart of another communication method according to an embodiment of this application;
FIG. 6 is a diagram of a structure of a communication apparatus according to an embodiment of this application; and
FIG. 7 is a diagram of a structure of a simplified RAN according to an embodiment of this application.

### DESCRIPTION OF EMBODIMENTS

The following describes technical solutions in embodiments of this application with reference to the accompanying drawings in embodiments of this application. Terms "system" and "network" may be used interchangeably in embodiments of this application. Unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

First, a communication system applicable to embodiments of this application is described below. The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, or a 5th generation (5th generation, 5G) mobile communication system or new radio (new radio, NR) system, or applied to a future communication system or another similar communication system. Without special description, the following uses the 5G mobile communication system as an example.

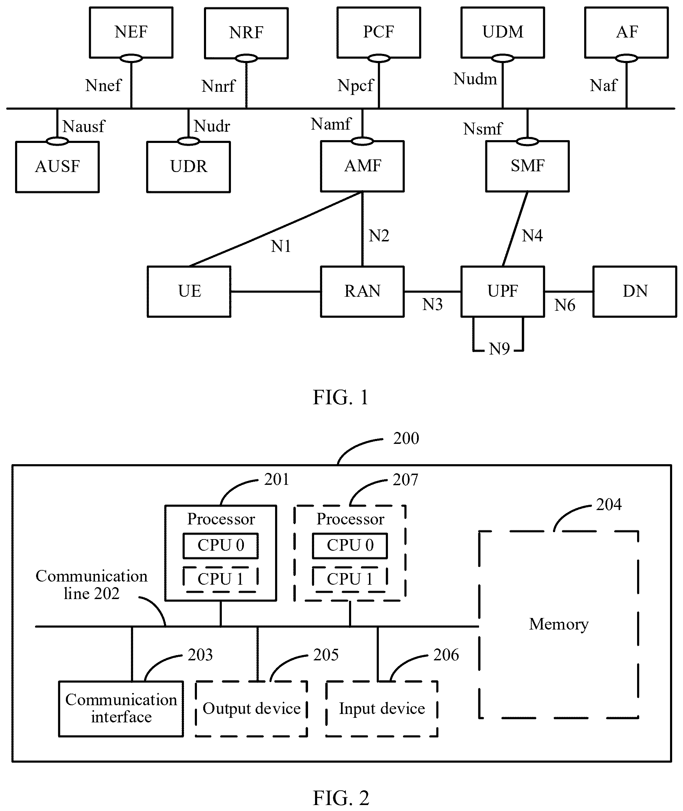

For ease of understanding embodiments of this application, a communication system applicable to embodiments of this application is described by using a 5G network architecture shown in FIG. 1 as an example. FIG. 1 shows the 5G network architecture. The network architecture may include an operator network and a data network (data network, DN).

The operator network may include one or more of the following network elements: an authentication server function (Authentication Server Function, AUSF) network element, a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN) device, a user plane function (user plane function, UPF) network element, a network slice selection function (Network Slice Selection Function, NSSF) network element (not shown in the figure), and the like. In the operator network, a network element or device other than the radio access network device may be referred to as a core network element or a core network device.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

A terminal communicating with a RAN may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

The AMF network element performs functions such as mobility management and access authentication/authorization. In addition, the AMF network element is further responsible for transferring user policies between the terminal and the PCF.

The SMF network element performs functions such as session management, execution of control policies delivered by the PCF, UPF selection, and terminal internet protocol (internet protocol, IP) address allocation.

The UPF network element, serving as an interface UPF with the data network, completes functions such as user plane data forwarding, session/flow level-based charging statistics, and bandwidth limiting.

The UDM network element performs functions such as subscription data management and user access authorization.

The UDR performs functions of storage and retrieval of subscription data, policy data, application data, and other types of data.

The NEF network element is configured to support exposure of capabilities and events.

The AF network element transfers a requirement of an application side on a network side, for example, a QoS requirement or user status event subscription. The AF may be a third-party functional entity, or may be an operator-deployed application service, for example, an IP multimedia subsystem (IP Multimedia Subsystem, IMS) voice call service.

The PCF network element is responsible for policy control functions such as charging for a session and a service flow level, QoS bandwidth assurance and mobility management, and terminal policy decision.

The NRF network element may be configured to provide a network element discovery function, and provide, based on a request of another network element, network element information corresponding to a network element type. The NRF further provides network element management services such as network element registration, update, and deregistration, and network element status subscription and push.

The AUSF network element is responsible for authenticating a user, to determine whether the user or a device is allowed to access a network.

The NSSF network element is configured to select a network slice, count users in the network slice, and the like.

The DN is a network located outside the operator network. A plurality of DNs can access the operator network, and a plurality of services can be deployed on the DN, to provide services including data and/or voice and the like for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server to obtain instructions of the control server, transmit collected sensor data to the control server according to the instructions, and the like. For another example, the DN is an internal office network of a company, a mobile phone or a computer of an employee in the company may be the terminal, and the mobile phone or the computer of the employee can access information, a data resource, or the like on the internal office network of the company. A plurality of services may be deployed on the DN, to provide services including data and/or voice and the like for a terminal device. The DN may include a plurality of application servers (application servers, ASs), and each AS may provide at least one service.

In FIG. 1, Nausf, Nnef, Npcf, Nudm, Naf, Namf, and Nsmf are respectively service-oriented interfaces provided by the AUSF, the NEF, the PCF, the UDM, the AF, the AMF, and the SMF, to invoke corresponding service-oriented operations. N1, N2, N3, N4, N6, and N9 are interface sequence numbers. For meanings of the interface sequence numbers, refer to meanings defined in the 3rd generation partnership project (3rd generation partnership project, 3GPP) standard protocol. This is not limited herein.

It should be understood that, in this application, for ease of description, the "network element" may be omitted. For example, the SMF network element and the SMF in embodiments of this application express a same meaning. For ease of description, the two words "network element" are omitted, and other terms are similar.

Optionally, each device in FIG. 1 may be implemented by one device, may be jointly implemented by a plurality of devices, or may be one functional module in one device. This is not specifically limited in embodiments of this application. It may be understood that the foregoing function may be a network element in a hardware device, may be a software function running on dedicated hardware, or may be a virtualization function instantiated on a platform (for example, a cloud platform).

For example, each device in FIG. 1 may be implemented through a communication apparatus 200 in FIG. 2. FIG. 2 is a diagram of a hardware structure applicable to a communication apparatus according to an embodiment of this application. The communication apparatus 200 includes at least one processor 201, a communication line 202, and at least one communication interface 203. Optionally, the communication apparatus 200 may further include a memory 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path on which information is transferred between the foregoing components.

The communication interface 203 is any apparatus (such as an antenna) like a transceiver, and is configured to communicate with another device or a communication network. The another device may be, for example, a RAN. The communication network may be, for example, an ethernet or a wireless local area network (wireless local area network, WLAN).

The memory 204 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communication line 202. The memory may alternatively be integrated with the processor. The memory provided in embodiments of this application may be usually non-volatile.

The memory 204 is configured to store computer-executable instructions for executing the solutions in this application, and the processor 201 controls execution. The processor 201 is configured to execute the computer-executable instructions stored in the memory 204, to implement a method provided in the following embodiment of this application.

Optionally, the computer-executable instructions in this embodiment of this application may also be referred to as application program code. This is not specifically limited in embodiments of this application.

In a possible implementation, the processor 201 may include one or more CPUs, for example, a CPU 0 and a CPU 1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

The foregoing communication apparatus 200 may be a general-purpose device or a dedicated device. During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in embodiments of this application.

The following describes in detail a communication method provided in embodiments of this application with reference to FIG. 1 and FIG. 2. Specifically, the following uses an example in which a terminal device, an access network device, a user plane network element, a policy control network element, a session management network element, an access management network element, and an application function network element are respectively the UE, the RAN, the UPF, the PCF, the SMF, the AMF, and the AF in FIG. 1 for description.

It should be noted that names of messages between network elements, names of parameters in the messages, or the like in the following embodiments of this application are merely examples, and there may be other names during specific implementation. This is not specifically limited in embodiments of this application.

In this application, a PDU set indicates a basic data unit for performing processing for a service (for example, encoding processing and/or decoding processing for a media service) at a service layer. For example, the media service may be a video service, for example, a virtual reality service, an augmented reality service, a mixed reality service, a cloud game service, or a live streaming (for example, live streaming of a sports event or live streaming of a sale) program. Alternatively, the media service may be an audio service or the like. This is not limited in this application.

A plurality of data packets belonging to the PDU set may include at least one original data packet, and may also include at least one redundant data packet. The redundant data packet may be obtained by encoding the original data packet in the PDU set by an AS. For example, the redundant data packet may be obtained by performing FEC on the original data packet by the AS.

In this application, redundancy of the PDU set may be determined based on a quantity of redundant data packets in the PDU set and a total quantity of the data packets in the PDU set. For example, the redundancy of the PDU set is a ratio of the quantity of redundant data packets in the PDU set to the total quantity of the data packets in the PDU set. For another example, the redundancy of the PDU set is a ratio of a quantity of original data packets in the PDU set (where the quantity of original data packets is a difference between the total quantity of the data packets in the PDU set and the quantity of redundant data packets in the PDU set) to the total quantity of the data packets in the PDU set. The following uses an example in which the redundancy of the PDU set is the ratio of the quantity of redundant data packets in the PDU set to the total quantity of the data packets in the PDU set for description.

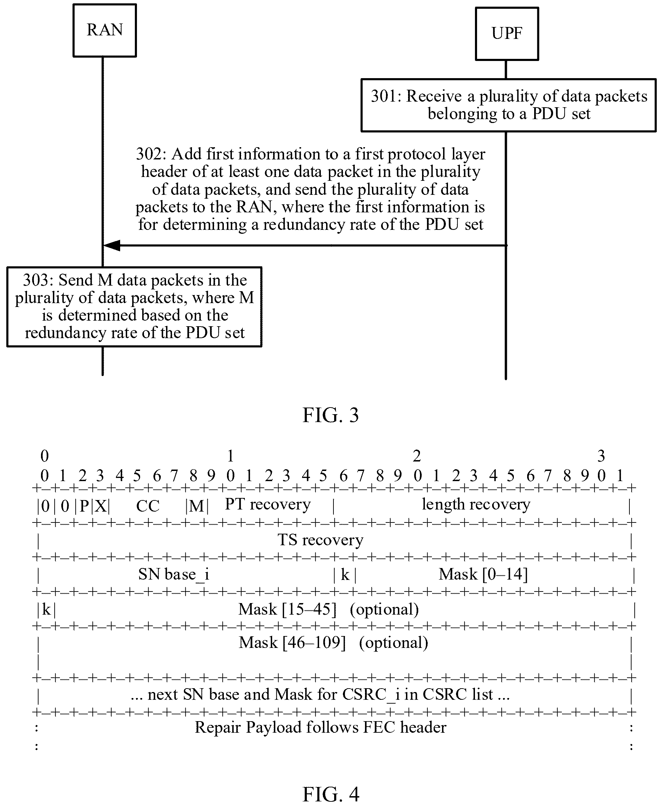

FIG. 3 shows a communication method according to an embodiment of this application. The communication method includes but is not limited to the following steps.

301: A UPF receives a plurality of data packets belonging to a PDU set.

For example, the UPF receives a plurality of data packets from an AS, where the plurality of data packets may form one PDU set, a second protocol layer header of at least one data packet in the plurality of data packets includes third information, and the third information is for determining, by the UPF, the PDU set to which the plurality of data packets belong. A second protocol layer may be, for example, an application transport layer, and a protocol supported by the application transport layer may be, for example, an RTP. In a possible implementation, the second protocol layer header may also be understood as an extension of the second protocol layer header.

For ease of understanding, with reference to Table 1 and FIG. 4, a structure of a data packet is briefly described by using an example of performing transmission of a data packet through the RTP. An original data packet and a redundant data packet each may include an internet protocol (internet protocol, IP) header (header), a transport header (transport header), an RTP header, and an RTP payload (payload). The RTP payload of the original data packet includes media service data, and the RTP payload of the redundant data packet includes an FEC header and a repair payload (repair payload). An "SN base_i" field in the FEC header indicates a smallest sequence number of a data packet protected by the redundant data packet, and a "Mask" field in the FEC header indicates a quantity of original data packets participating in generation of the redundant data packet. It should be understood that the foregoing briefly describes only content in this application. For other content, refer to RFC 8627.

**Table 1: Structure of a data packet**

| |
|---|
| IP header |
| Transport header |
| RTP header |
| RTP payload |

With reference to Table 1 and FIG. 4, the third information may be understood as an "M" field. To be specific, the UPF may determine a boundary point of a current PDU set by using an "M" field included in an RTP header of one data packet in a plurality of data packets. A data packet carrying the M field may be a 1^{st} data packet in the data packets in the PDU set, or may be a last data packet in the data packets in the PDU set. It should be understood that an RTP header of only one data packet in one PDU set includes the "M" field. Therefore, the UPF determines, with reference to a boundary point of a previous PDU set and the boundary point of the current PDU set, the plurality of data packets belonging to the current PDU set.

Alternatively, the third information may be understood as a timestamp. To be specific, the UPF may determine, by using a timestamp included in an RTP header of each data packet in a plurality of data packets, a plurality of data packets belonging to a same PDU set. For example, if the RTP header of each data packet in the plurality of data packets includes a same timestamp, it indicates that the data packets belong to the same PDU set.

Alternatively, third information included in a second protocol layer header of one data packet in the plurality of data packets is an "S" field, or third information included in a second protocol layer header of another data packet in the plurality of data packets is an "E" field. To be specific, the UPF may respectively determine a start location and an end location of a PDU set by using an "S" field included in an RTP header extension of one data packet in a plurality of data packets and an "E" field included in an RTP header extension of another data packet in the plurality of data packets, and may further determine that the data packet including the S field, the data packet including the E field, and a data packet included between the data packets including the S field and the E field are the plurality of data packets belonging to the same PDU set. For example, the AS separately sends a data packet 1, a data packet 2, a data packet 3, and a data packet 4 to the UPF. An RTP header extension of the data packet 1 includes an "S" field, which indicates that a start location of a PDU set is the data packet 1. An RTP header extension of the data packet 4 includes an "E" field, which indicates that an end location of the PDU set is the data packet 4. However, the "E" field does not appear in the data packet 2, and the "E" field does not appear in the data packet 3. In other words, the data packet 1 to the data packet 4 are data packets in the same PDU set.

302: The UPF adds first information to a first protocol layer header of at least one data packet in the plurality of data packets, and sends the plurality of data packets to a RAN, where the first information is for determining redundancy of the PDU set.

Correspondingly, the RAN receives the plurality of data packets belonging to the PDU set.

Optionally, a first protocol layer may be, for example, a GTP-U layer. In a possible implementation, the first protocol layer header may also be understood as an extension of the first protocol layer header.

It should be noted that a data packet sent by the AS has no first protocol layer header. After receiving the data packet from the AS, the UPF may add a first protocol layer header to the data packet.

For example, the first information may be implemented in at least the following four manners:
Manner 1.1: The first information includes an identifier of a type of the data packet, and the type of the data packet includes an original data packet and/or a redundant data packet. In a possible implementation, that the UPF adds the first information to the first protocol layer header of the at least one data packet in the plurality of data packets may be understood as follows: The UPF adds, to a first protocol layer header of an original data packet in the plurality of data packets, information for identifying the original data packet, for example, an identifier of the original data packet; and/or the UPF adds, to a first protocol layer header of a redundant data packet in the plurality of data packets, information for identifying the redundant data packet, for example, an identifier of the redundant data packet.
Manner 1.2: The first information is the redundancy of the PDU set. In a possible implementation, that the UPF adds the first information to the first protocol layer header of the at least one data packet in the plurality of data packets may be understood as one of the following: The UPF adds the redundancy of the PDU set to a first protocol layer header of each data packet in the plurality of data packets, the UPF adds the redundancy of the PDU set to a first protocol layer header of a 1^{st} data packet in the current PDU set, the UPF adds the redundancy of the PDU set to a first protocol layer header of a last data packet in the current PDU set, the UPF adds the redundancy of the PDU set to a first protocol layer header of a data packet at an interval of a specific quantity of data packets, or the like. The foregoing descriptions are merely examples, and there may be another combination manner. This is not limited in this application. The 1^{st} data packet may be understood as a data packet with a smallest sequence number in the PDU set, and the last data packet may be understood as a data packet with a largest sequence number in the PDU set.
Manner 1.3: The first information includes a type of the PDU set. In this application, the type of the PDU set may include, for example, PDU sets of different importance degrees, for example, an independently decoded frame and a non-independently decoded frame, where an importance degree of the independently decoded frame is higher than an importance degree of the non-independently decoded frame; and for another example, a key media frame and a discardable media frame, where an importance degree of the key media frame is higher than an importance degree of the discardable media frame. In a possible implementation, that the UPF adds the first information to the first protocol layer header of the at least one data packet in the plurality of data packets may be understood as one of the following: The UPF adds the type of the PDU set to a first protocol layer header of each data packet in the plurality of data packets, the UPF adds the type of the PDU set to a first protocol layer header of a 1^{st} data packet in the current PDU set, the UPF adds the type of the PDU set to a first protocol layer header of a last data packet in the current PDU set, the UPF adds the type of the PDU set to a first protocol layer header of a data packet at an interval of a specific quantity of data packets, or the like. The foregoing descriptions are merely examples, and there may be another combination manner. This is not limited in this application.
Manner 1.4: The first information includes an identifier of a QoS flow. In a possible implementation, that the UPF adds the first information to the first protocol layer header of the at least one data packet in the plurality of data packets may be understood as one of the following: The UPF adds the identifier of the QoS flow to a first protocol layer header of each data packet in the plurality of data packets, the UPF adds the identifier of the QoS flow to a first protocol layer header of a 1^{st} data packet in the current PDU set, the UPF adds the identifier of the QoS flow to a first protocol layer header of a last data packet in the current PDU set, the UPF adds the identifier of the QoS flow to a first protocol layer header of a data packet at an interval of a specific quantity of data packets, or the like. The foregoing descriptions are merely examples, and there may be another combination manner. This is not limited in this application.

In this application, the identifier of the QoS flow is for identifying a QoS flow in a data connection session. For example, the identifier of the QoS flow is a QFI. The data connection session is an association between UE and the UPF, and is for providing a connection service for communication between the UE and an accessed network or between the UE and another UE. A creation process of the data connection session may be initiated by the UE, or may be initiated by another network device. In embodiments of this application, the data connection session is also sometimes referred to as a "data session" or a "session" for short. In a possible implementation, the data connection session may be a PDU session, or may be a session in another form. This is not limited in embodiments of this application.

In a possible implementation, the method further includes: The UPF determines a type of at least one data packet in the plurality of data packets. Optionally, the UPF may determine the type of the at least one data packet based on a second protocol layer header (for example, the second protocol layer header includes an identifier of the type of the data packet) of the at least one data packet. For example, the UPF may determine, based on an FEC header of a data packet or an RTP header extension field of the data packet, that the data packet is a redundant data packet, and determine, based on an "SN base_i" field and a "Mask" field that are included in the FEC header of the data packet, a total quantity of original data packets protected by the redundant data packet. It may be understood that, the UPF may distinguish, by using a plurality of groups of "SN base_i" fields and "Mask" fields, between redundant data packets and original data packets protected by the redundant data packets. In this way, the UPF may determine the identifier of the type of the data packet based on the second protocol layer header of the at least one data packet in the plurality of data packets.

Optionally, the method further includes: The UPF determines the redundancy of the PDU set. Detailed descriptions are as follows:
In an example, the UPF determines a quantity of redundant data packets in the PDU set and a total quantity of the data packets in the PDU set based on a type of a data packet in the PDU set; and the UPF determines the redundancy of the PDU set based on the quantity of redundant data packets in the PDU set and the total quantity of the data packets in the PDU set.

In another example, a second protocol layer header of at least one data packet in the plurality of data packets is for determining the type of the PDU set. For example, the second protocol layer header includes the type of the PDU set. An example of performing transmission of a data packet through the RTP is used. An RTP header or header extension of an original data packet in the plurality of data packets includes the type of the PDU set (for example, an "I" field in the header extension indicates an independently decoded frame, and a "D" field in the header extension indicates a non-independently decoded frame; and for another example, the "I" field in the header extension indicates a key media frame, and the "D" field in the header extension indicates a discardable media frame); and/or an RTP header or header extension of a redundant data packet in the plurality of data packets includes the type of the PDU set. The UPF may obtain a first correspondence between the type of the PDU set and the redundancy of the PDU set, so that the UPF may determine the redundancy of the PDU set based on the first correspondence and the type of the PDU set. The first correspondence may be, for example, predefined or preconfigured, or the first correspondence may be, for example, indicated by an SMF to the UPF. Optionally, the first correspondence may include a relationship between different types of the PDU set and different redundancies of the PDU set.

In a possible implementation, the method further includes: The UPF obtains a second correspondence between an identifier of a QoS flow and the redundancy of the PDU set; and the UPF determines the identifier of the QoS flow based on the second correspondence and the redundancy of the PDU set, that is, the UPF maps the PDU set to the corresponding QoS flow based on the redundancy of the PDU set. The second correspondence may be, for example, predefined or preconfigured, or the second correspondence may be, for example, indicated by the SMF to the UPF. In this way, the UPF may determine the identifier of the QoS flow based on the second correspondence and the redundancy of the PDU set. Optionally, the second correspondence may include a relationship between identifiers of different QoS flows and different redundancies of the PDU set.

In a possible implementation, the method further includes: The UPF adds an identifier of the PDU set to the first protocol layer header of the at least one data packet in the plurality of data packets. For example, the UPF adds the identifier of the PDU set to a first protocol layer header of each data packet in the plurality of data packets, the UPF adds the identifier of the PDU set to a first protocol layer header of a 1^{st} data packet in the current PDU set, the UPF adds the identifier of the PDU set to a first protocol layer header of a last data packet in the current PDU set, or the UPF adds the identifier of the PDU set to a first protocol layer header of a data packet at an interval of a specific quantity of data packets. The foregoing descriptions are merely examples, and there may be another combination manner. This is not limited in this application. The identifier of the PDU set is for identifying the PDU set, and the identifier of the PDU set may be, for example, a sequence number of the PDU set.

Optionally, that the RAN receives the plurality of data packets belonging to the PDU set may be understood as follows: The RAN receives the plurality of data packets from the UPF, and the RAN determines, based on the identifier of the PDU set included in the at least one data packet in the plurality of data packets, the PDU set to which the plurality of data packets belong. For example, a plurality of data packets with a same identifier of a PDU set belong to the same PDU set. For another example, the RAN determines, based on an identifier of a PDU set included in a 1^{st} data packet in the current PDU set (for example, a start identifier of the PDU set, for identifying the 1^{st} data packet in the PDU set) and an identifier of a PDU set included in a 1^{st} data packet in the next PDU set, that a plurality of data packets between the 1^{st} data packet in the current PDU set and the 1^{st} data packet in the next PDU set belong to the current PDU set. For another example, the RAN determines, based on an identifier of a PDU set included in a last data packet in the current PDU set (for example, an end identifier of the PDU set, for identifying the last data packet in the PDU set) and an identifier of a PDU set included in a last data packet in the previous PDU set, that a plurality of data packets between the last data packet in the current PDU set and the last data packet in the previous PDU set belong to the current PDU set.

303: The RAN sends M data packets in the plurality of data packets, where M is determined based on the redundancy of the PDU set.

In a possible implementation, step 303 may be understood as follows: The RAN determines configuration information of a DRB based on the redundancy of the PDU set, where the DRB is for bearing the M data packets; and that the RAN sends the M data packets includes: The RAN sends the M data packets based on the configuration information of the DRB. For example, the RAN sends at least the M data packets to the UE. In other words, a quantity of data packets sent by the RAN to the UE may be greater than or equal to M and less than or equal to the total quantity of the data packets in the PDU set. Optionally, the M data packets may be, for example, any M data packets in the plurality of data packets. This indicates that the RAN can reduce a transmission amount of data packets, so that air interface resources can be saved.

For example, the total quantity of the data packets in the PDU set is 4, for example, an original data packet 1, an original data packet 2, a redundant data packet 1, and a redundant data packet 2, the redundancy of the PDU set is 1/2, and M is 2. Therefore, the RAN may send at least two data packets to the UE. For example, the RAN may send any two data packets in the original data packet 1, the original data packet 2, the redundant data packet 1, and the redundant data packet 2 to the UE. For another example, the RAN may send any three data packets in the original data packet 1, the original data packet 2, the redundant data packet 1, and the redundant data packet 2 to the UE. For another example, the RAN may send the original data packet 1, the original data packet 2, the redundant data packet 1, and the redundant data packet 2 to the UE.

For example, the configuration information of the DRB may include at least one of the following: a PER, a PDB, a PDU set processing rule, and the like. The PDU set processing rule indicates to perform transmission of the PDU set in the DRB based on the redundancy of the PDU set, that is, it is ensured that transmission of a specific proportion of data packets in the PDU set succeeds in data transmission through the DRB. For example, the RAN sends the M data packets in the PDU set.

M is determined based on the redundancy of the PDU set. For example, it may be understood that M is a product of the redundancy of the PDU set and the total quantity of the data packets in the PDU set.

When the first information includes the identifier of the type of the data packet, the method further includes: The RAN determines a quantity of redundant data packets in the PDU set and a total quantity of the data packets in the PDU set based on first information included in a data packet in the PDU set; and the RAN determines the redundancy of the PDU set based on the quantity of redundant data packets in the PDU set and the total quantity of the data packets in the PDU set. This indicates that the RAN may determine the redundancy of the PDU set, so that the RAN may send some data packets in the plurality of data packets with reference to the redundancy of the PDU set. This ensures user service experience, and also saves air interface resources.

That the RAN determines the quantity of redundant data packets in the PDU set based on the first information included in the data packet in the PDU set may be understood as, for example, any one of the following:
Manner 2.1: A first protocol layer header of an original data packet in the plurality of data packets includes an identifier of the original data packet. The RAN determines a quantity of original data packets in the PDU set based on the identifier of the original data packet included in the original data packet in the PDU set. The RAN determines the quantity of redundant data packets in the PDU set based on the quantity of original data packets in the PDU set. For example, the RAN determines the quantity of redundant data packets in the PDU set based on a difference between the total quantity of the data packets in the PDU set and the quantity of original data packets in the PDU set.
Manner 2.2: A first protocol layer header of a redundant data packet in the plurality of data packets includes an identifier of the redundant data packet. The RAN determines the quantity of redundant data packets in the PDU set based on the identifier of the redundant data packet included in the redundant data packet in the PDU set.
Manner 2.3: A first protocol layer header of an original data packet and a first protocol layer header of a redundant data packet in the plurality of data packets respectively include an identifier of the original data packet and an identifier of the redundant data packet. The RAN may determine the quantity of redundant data packets in the PDU set based on a quantity of original data packets in the PDU set. For details, refer to Manner 2.1. Alternatively, the RAN determines the quantity of redundant data packets in the PDU set based on the identifier of the redundant data packet included in the redundant data packet in the PDU set.

Optionally, for any one of Manner 2.1 to Manner 2.3, the RAN may determine the total quantity of the data packets in the PDU set based on the identifier of the PDU set included in the data packet in the PDU set. For example, the RAN may count a quantity of data packets with a same identifier of a PDU set. For another example, the RAN may determine a quantity of data packets between a 1^{st} data packet in a current PDU set and a 1^{st} data packet in a next PDU set. For another example, the RAN may determine a quantity of data packets between a last data packet in a current PDU set and a last data packet in a previous PDU set. For another example, the RAN may determine a quantity of all data packets between a 1^{st} data packet and a last data packet in a current PDU set. For Manner 2.3, the RAN may alternatively determine a total quantity of redundant data packets in the PDU set and a total quantity of original data packets in the PDU set respectively based on the identifier of the redundant data packet included in the redundant data packet in the PDU set and the identifier of the original data packet included in the original data packet in the PDU set, and determine the total quantity of the data packets in the PDU set based on the total quantity of redundant data packets in the PDU set and the total quantity of original data packets in the PDU set.

In a possible implementation, the identifier of the type of the data packet, the identifier of the PDU set, and/or the like may be indicated by using a same field or different fields in the first protocol layer header. This is not limited herein.

When the first information includes the type of the PDU set, the method further includes: The RAN obtains a first correspondence between the type of the PDU set and the redundancy of the PDU set; and the RAN determines the redundancy of the PDU set based on the first correspondence and the type of the PDU set. The first correspondence may be, for example, predefined or preconfigured, or the first correspondence may be, for example, indicated by the SMF to the RAN. This indicates that the RAN may determine the redundancy of the PDU set, so that the RAN may send some data packets in the plurality of data packets with reference to the redundancy of the PDU set. This ensures user service experience, and also saves air interface resources.

When the first information includes the identifier of the QoS flow, the method further includes: The RAN obtains a second correspondence between the identifier of the QoS flow and the redundancy of the PDU set; and the RAN determines the redundancy of the PDU set based on the second correspondence and the identifier of the QoS flow. The second correspondence may be, for example, predefined or preconfigured, or the second correspondence may be, for example, indicated by the SMF to the RAN. This indicates that the RAN may determine the redundancy of the PDU set, so that the RAN may send some data packets in the plurality of data packets with reference to the redundancy of the PDU set. This ensures user service experience, and also saves air interface resources.

In the foregoing embodiment, the first information for determining the redundancy of the PDU set by the RAN is carried in a data packet belonging to a protocol data unit set, that is, the first information is carried in the data packet. This implements dynamical determining of the redundancy of the PDU set, and can be more flexibly applicable to dynamical changes of redundancies in more scenarios. In addition, the RAN may send some data packets in the plurality of data packets with reference to the redundancy of the PDU set, to save air interface resources. In a possible implementation, the method further includes: The RAN discards a data packet other than the M data packets in the PDU set when the M data packets are successfully transmitted. This ensures user service experience, also saves air interface resources, and increases an air interface capacity.

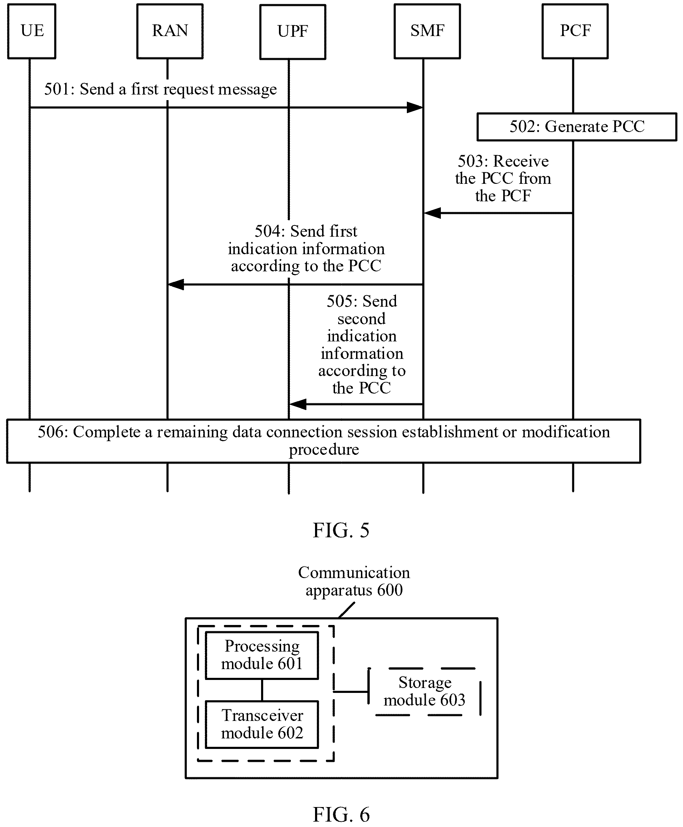

This application further provides an embodiment shown in FIG. 5. The embodiment shown in FIG. 5 may be combined with the embodiment shown in FIG. 3. For example, based on the embodiment shown in FIG. 3, the following steps are further included:
501: The UE sends a first request message to the SMF. Correspondingly, the SMF receives the first request message from the UE.

Specifically, the UE may send a non-access stratum (Non-Access Stratum, NAS) message to an AMF through the RAN. The NAS message includes the first request message. The AMF sends the first request message to the SMF.

Optionally, for example, the first request message may be for establishing a data connection session. The first request message may be a data connection session establishment request message, for example, a PDU session establishment request (PDU session establishment request) message. Alternatively, the first request message is for modifying a data connection session. The first request message may be a data connection session modification request message, for example, a PDU session modification request (PDU session modification request) message. It should be understood that a data connection session establishment procedure or a data connection session modification procedure is not limited in this application. For details, refer to 3GPP technical specification (technical specification, TS) 23.502.

Step 501 is an optional step, that is, step 501 may be performed or not performed.

502: A PCF generates a PCC rule.

For example, the PCF receives second information from an AF, and the PCF may generate the PCC rule based on the second information. In a possible implementation, that the PCF receives the second information from the AF may be understood as follows: If the AF is in a trusted domain, the PCF receives the second information from the AF through a service interface of the PCF, for example, an Npcf_PolicyAuthorization service interface. If the AF is in an untrusted domain, the PCF receives the second information from the AF through an NEF. Specifically, the AF sends the second information to the NEF by invoking a service interface of the NEF, for example, an Nnef_AFSessionWithQoS service interface, and then the NEF sends the second information to the PCF by invoking the service interface of the PCF.

In a possible implementation, the second information may indicate at least one of the following: a RAN to determine redundancy of a PDU set based on a first protocol layer header of a data packet from a UPF; the RAN to transmit a data packet based on the redundancy of the PDU set; and the UPF to add first information to a first protocol layer header of a data packet from an AS. For the first protocol layer header, the first information, and the like, refer to the related descriptions of step 302 in FIG. 3. Details are not described herein again.

That the RAN determines the redundancy of the PDU set based on the first protocol layer header of the data packet from the UPF may be understood as follows: The RAN transmits the PDU set based on the redundancy of the PDU set. For example, the RAN transmits the entire PDU set based on the redundancy of the PDU set. Alternatively, it may be understood as that the RAN determines the redundancy of the PDU set based on the first protocol layer header of the data packet from the UPF and performs transmission scheduling optimization based on the redundancy of the PDU set, or the like.

Optionally, that the second information indicates the UPF to add the first information to the first protocol layer header of the data packet from the AS includes: The second information indicates the UPF to add the first information to the first protocol layer header of the data packet based on a second protocol layer header of a data packet from the AS.

For example, the first information includes an identifier of a type of the data packet, and the second information indicates the UPF to add the first information to the first protocol layer header of the data packet from the AS based on a type of the data packet from the AS. Alternatively, the first information is a type of the PDU set, and the second information indicates the UPF to add the first information to the first protocol layer header of the data packet from the AS based on a type of a PDU set to which the data packet from the AS belongs. Alternatively, the first information is the redundancy of the PDU set, and the second information indicates the UPF to add the first information to the first protocol layer header of the data packet from the AS based on a type of a PDU set to which the data packet from the AS belongs and a first correspondence. Alternatively, the first information is a QoS identifier, and the second information indicates the UPF to add the first information to the first protocol layer header of the data packet from the AS based on a type of a PDU set to which the data packet from the AS belongs and a second correspondence. For the first correspondence, the second correspondence, and the like, refer to the related descriptions of step 302 in FIG. 3. Details are not described herein again.

Optionally, when the first information is the redundancy of the PDU set, or the first information includes the type of the PDU set, the second information may further indicate the first correspondence between the type of the PDU set and the redundancy of the PDU set. When the first information includes the identifier of the QoS flow, the second information may further indicate a second correspondence between the QoS flow and the redundancy rate of the PDU set. In this case, the QoS flow in the second information may be understood as service flow description information corresponding to the QoS flow, for example, an application identifier or an IP quintuple (for example, a source IP address/port number, a target IP address/port number, and a transport protocol). The transport protocol is, for example, a transmission control protocol (transmission control protocol, TCP) or a user datagram protocol (user datagram protocol, UDP). Optionally, the second information may further indicate at least one of the following: the UPF to determine the PDU set to which the data packet from the AS belongs; and a protocol used by the AS and/or the UPF for transmission of the data packet. In a possible implementation, the protocol used by the AS and/or the UPF to perform transmission of the data packet may be predefined or preconfigured in each network element, for example, one or more of the UPF, the PCF, and the SMF. It may be understood that a manner of parsing the data packet by the UPF or the RAN is related to the protocol for transmission of the data packet.

In a possible implementation, the PCC rule may indicate at least one of the following: the RAN to determine the redundancy of the PDU set based on the first protocol layer header of the data packet from the UPF; the UPF to add the first information to the first protocol layer header of the data packet from the AS; and the UPF to determine the PDU set to which the data packet from the AS belongs. For example, same information in the PCC rule indicates at least one of the following: the RAN to determine the redundancy of the PDU set based on the first protocol layer header of the data packet from the UPF; the UPF to add the first information to the first protocol layer header of the data packet from the AS; and the UPF to determine the PDU set to which the data packet from the AS belongs. For another example, different information in the PCC rule respectively indicates the following: the RAN to determine the redundancy of the PDU set based on the first protocol layer header of the data packet from the UPF; the UPF to add the first information to the first protocol layer header of the data packet from the AS; and the UPF to determine the PDU set to which the data packet from the AS belongs.

That the UPF adds the first information to the first protocol layer header of the data packet from the AS may be understood as follows: The UPF adds the first information to the first protocol layer header of the data packet based on the second protocol layer header of the data packet from the AS.

For example, when the first information includes the identifier of the type of the data packet, the PCC rule indicates the UPF to add the first information to the first protocol layer header of the data packet based on a type of the data packet from the AS. When the first information is the type of the PDU set, the PCC rule indicates the UPF to add the first information to the first protocol layer header of the data packet from the AS based on a type of a PDU set to which the data packet belongs. When the first information is the redundancy of the PDU set, the PCC rule indicates the UPF to add the first information to the first protocol layer header of the data packet based on a type of a PDU set to which the data packet from the AS belongs and the first correspondence. When the first information is the QoS identifier, the PCC rule indicates the UPF to add the first information to a first protocol layer header of the data packet based on a type of a PDU set to which the data packet from the AS belongs and the second correspondence. 503: The SMF receives the PCC rule from the PCF. Correspondingly, the PCF sends the PCC rule to the SMF.

Optionally, for example, the PCC rule may be carried in a session management policy association establishment (SM policy association establishment) message or an SM policy association modification (SM policy association modification) message. When the first request message in step 501 is the data connection session establishment request message, the PCC rule is carried in the SM policy association establishment message. When the first request message is the data connection session modification request message, the PCC rule is carried in the SM policy association modification message.

When step 501 is performed, step 503 may be understood as follows: When the UE initiates the data connection session establishment procedure, the SMF actively initiates a session management policy association establishment procedure; or when the UE initiates the data connection session modification procedure, the SMF actively initiates a session management policy association modification procedure. When step 501 is not performed, step 503 may be understood as a session management policy association modification procedure initiated by the PCF.

504: The SMF sends first indication information according to the PCC rule. For example, the SMF sends the first indication information to the RAN according to the PCC rule. Correspondingly, the RAN receives the first indication information from the SMF.

The first indication information indicates the RAN to determine the redundancy of the PDU set based on the first protocol layer header of the data packet from the UPF. Optionally, the first indication information may further indicate the RAN to transmit the data packet based on the redundancy of the PDU set.

Optionally, for example, the first indication information may be carried in an N2 interface SM (N2 SM) message.

505: The SMF sends second indication information according to the PCC rule. For example, the SMF sends the second indication information to the UPF according to the PCC rule. Correspondingly, the UPF receives the second indication information from the SMF.

The second indication information indicates the UPF to add the first information to the first protocol layer header of the data packet from the AS. In a possible implementation, that the second indication information indicates the UPF to add the first information to the first protocol layer header of the data packet from the AS includes: The second indication information indicates the UPF to add the first information to the first protocol layer header of the data packet based on the second protocol layer header of the data packet from the AS.

For example, when the first information includes the identifier of the type of the data packet, the second indication information indicates the UPF to add the first information to the first protocol layer header of the data packet based on a type of the data packet from the AS. When the first information is the type of the PDU set, the second indication information indicates the UPF to add the first information to the first protocol layer header of the data packet from the AS based on a type of a PDU set to which the data packet belongs. When the first information is the redundancy of the PDU set, the second indication information indicates the UPF to add the first information to the first protocol layer header of the data packet based on a type of a PDU set to which the data packet from the AS belongs and the first correspondence. When the first information is the QoS identifier, the second indication information indicates the UPF to add the first information to the second protocol layer header of the data packet based on a type of a PDU set to which the data packet from the AS belongs and the second correspondence.

In a possible implementation, for example, the second indication information may be carried in an N4 session establishment request (N4 session establishment request) message or an N4 session modification request (N4 session modification request) message. If the PCC rule in step 503 is carried in the SM policy association establishment message, the second indication information may be carried in the N4 session establishment request message. If the PCC rule is carried in the SM policy association modification message, the second indication information may be carried in the N4 session modification request message.

Optionally, the N4 session establishment request message or the N4 session modification request message may further indicate the UPF to determine the PDU set to which the data packet from the AS belongs.

It should be noted that step 504 and step 505 are not necessarily performed in sequence. For example, step 504 may be performed before step 505, step 504 may be performed after step 505, or step 504 and step 505 are simultaneously performed.

506: Complete a remaining data connection session establishment or modification procedure. For details, refer to Section 4.3.2.1 in TS 23.502.

In the foregoing embodiment, the SMF may obtain the PCC rule, to ensure that the RAN can learn, from the SMF, that the redundancy of the PDU set needs to be determined, and the UPF can also learn that the first information needs to be added to the first protocol layer header of the data packet from the AS.

Optionally, the embodiment shown in FIG. 5 may be performed before step 301 in FIG. 3.

In addition, this application is not only applicable to transmission of a downlink service, but also applicable to transmission of an uplink service. It may be understood that when the uplink service is sent from the UE to the RAN, processing logic of the UE is similar to processing logic of the RAN in the downlink service. Details are not described herein again.

The foregoing mainly describes, from a perspective of interaction between devices, the solutions provided in this application. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the RAN, the UPF, the PCF, the SMF, or the like may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 6 is a diagram of a structure of a communication apparatus according to an embodiment of this application. The communication apparatus 600 may be used in any one of the foregoing methods. As shown in FIG. 6, the communication apparatus 600 includes a processing module 601 and a transceiver module 602. The processing module 601 may be one or more processors, and the transceiver module 602 may be a transceiver or a communication interface. The communication apparatus may be configured to implement the RAN, the UPF, the PCF, or the SMF in any one of the foregoing method embodiments, or configured to implement functions of the network element in any one of the foregoing method embodiments. The network element or network function may be a network element in a hardware device, may be a software function running on dedicated hardware, or may be a virtualization function instantiated on a platform (for example, a cloud platform). Optionally, the communication apparatus 600 may further include a storage module 603, configured to store program code and data of the communication apparatus 600.

In an instance, when the communication apparatus is used as a RAN or a chip used in the RAN, and performs steps performed by the RAN or the RAN in the foregoing method embodiments, the transceiver module 602 is configured to support communication with the UPF, an SMF, an AS, and the like. The transceiver module specifically performs a sending action and/or a receiving action performed by the RAN or the RAN in the method in any one of the foregoing method embodiments, for example, supports the RAN in performing another process described in this specification. The processing module 601 may be configured to support the communication apparatus 600 in performing an action other than sending and receiving that is performed by the RAN or the RAN in the foregoing method embodiments, for example, support the RAN in performing another process of the technology described in this specification.

Specifically, the transceiver module 602 is configured to receive a plurality of data packets belonging to a PDU set, where a first protocol layer header of at least one data packet in the plurality of data packets includes first information, and the first information is for determining redundancy of the PDU set by the RAN; and send M data packets in the plurality of data packets, where M is determined based on the redundancy of the PDU set.

In a possible implementation, the first information includes an identifier of a type of the data packet, and the type of the data packet includes an original data packet and/or a redundant data packet; and the processing module 601 is further configured to determine a quantity of redundant data packets in the PDU set and a total quantity of the data packets in the PDU set based on first information included in a data packet in the PDU set; and determine the redundancy of the PDU set based on the quantity of redundant data packets in the PDU set and the total quantity of the data packets in the PDU set.

In a possible implementation, the first information is the redundancy of the PDU set.

In a possible implementation, the transceiver module 602 is further configured to obtain a first correspondence between a type of the PDU set and the redundancy of the PDU set.

In a possible implementation, the first information includes the type of the PDU set; and the processing module 601 is further configured to determine the redundancy of the PDU set based on the first correspondence and the type of the PDU set.

In a possible implementation, the transceiver module 602 is further configured to obtain a second correspondence between an identifier of a QoS flow and the redundancy of the PDU set.

In a possible implementation, the first information includes the identifier of the QoS flow; and the processing module 601 is further configured to determine the redundancy of the PDU set based on the second correspondence and the identifier of the QoS flow.

In a possible implementation, the transceiver module 602 is further configured to receive first indication information from the SMF, where the first indication information indicates the RAN to determine the redundancy of the PDU set based on a first protocol layer header of a data packet from the UPF.

In a possible implementation, the processing module 601 is further configured to determine configuration information of a DRB based on the redundancy of the PDU set, where the DRB is for bearing the M data packets; and when sending the M data packets, the transceiver module 602 is configured to send the M data packets based on the configuration information of the DRB.

In an instance, when the communication apparatus is used as a UPF or a chip used in the UPF, and performs steps performed by the UPF or the UPF in the foregoing method embodiments, the transceiver module 602 is configured to support communication with a RAN, an SMF, an AS, and the like. The transceiver module specifically performs a sending action and/or a receiving action performed by the UPF or the UPF in the method in any one of the foregoing method embodiments, for example, supports the UPF in performing another process described in this specification. The processing module 601 may be configured to support the communication apparatus 600 in performing an action other than sending and receiving that is performed by the UPF or the UPF in the foregoing method embodiments, for example, support the UPF in performing step 302 and/or another process of the technology described in this specification.

Specifically, the transceiver module 602 is configured to receive a plurality of data packets belonging to a PDU set; and the processing module 601 is configured to add first information to a first protocol layer header of at least one data packet in the plurality of data packets, and send the plurality of data packets to the RAN through the transceiver module 602, where the first information is for determining redundancy of the PDU set.

In a possible implementation, a second protocol layer header of at least one data packet in the plurality of data packets is for determining a type of the data packet, the first information includes an identifier of the type of the data packet, and the type of the data packet includes an original data packet and/or a redundant data packet.

In a possible implementation, a second protocol layer header of at least one data packet in the plurality of data packets is for determining a type of the PDU set; the transceiver module 602 is further configured to obtain a first correspondence between the type of the PDU set and the redundancy of the PDU set; and the processing module 601 is further configured to determine the redundancy of the PDU set based on the first correspondence and the type of the PDU set.

In a possible implementation, the first information is the redundancy of the PDU set.

In a possible implementation, the first information includes an identifier of a QoS flow; the transceiver module 602 is further configured to obtain a second correspondence between the identifier of the QoS flow and the redundancy of the PDU set; and the processing module 601 is further configured to determine the identifier of the QoS flow based on the second correspondence and the redundancy of the PDU set.

In a possible implementation, a second protocol layer header of at least one data packet in the plurality of data packets is for determining a type of the PDU set, and the first information includes the type of the PDU set.

In a possible implementation, the transceiver module 602 is further configured to receive second indication information from the SMF, where the second indication information indicates the UPF to add the first information to a first protocol layer header of a data packet from the AS.

In a possible implementation, that the second indication information indicates the UPF to add the first information to the first protocol layer header of the data packet from the AS includes: The second indication information indicates the UPF to add the first information to the first protocol layer header of the data packet based on a second protocol layer header of a data packet from the AS.

In an instance, when the communication apparatus is used as a PCF or a chip used in the PCF, and performs steps performed by the PCF or the PCF in the foregoing method embodiments, the transceiver module 602 is configured to support communication with a RAN, an SMF, an AS, and the like. The transceiver module specifically performs a sending action and/or a receiving action performed by the PCF or the PCF in the method in any one of the foregoing method embodiments, for example, supports the PCF in performing another process described in this specification. The processing module 601 may be configured to support the communication apparatus 600 in performing an action other than sending and receiving that is performed by the PCF or the PCF in the foregoing method embodiments, for example, support the PCF in performing step 502 and/or another process of the technology described in this specification.

Specifically, the processing module 601 is configured to generate a PCC rule, where the PCC rule indicates the RAN to determine redundancy of a PDU set based on a first protocol layer header of a data packet from a UPF; and the transceiver module 602 is configured to send the PCC rule to the SMF.

In a possible implementation, the PCC rule further indicates the UPF to add first information to a first protocol layer header of a data packet from the AS, where the first information includes an identifier of a type of the data packet, and the type of the data packet includes an original data packet and/or a redundant data packet; or the first information includes redundancy of a PDU set to which the data packet belongs; or the first information includes a type of the PDU set to which the data packet belongs; or the first information is a QoS identifier.

In a possible implementation, that the PCC rule indicates the UPF to add first information to a first protocol layer header of a data packet from the AS includes: The PCC rule indicates the UPF to add the first information to the first protocol layer header of the data packet based on a second protocol layer header of a data packet from the AS.

In a possible implementation, when generating the PCC rule, the transceiver module 602 is configured to receive second information from an application function network element, where the second information indicates the RAN to determine the redundancy of the PDU set based on the first protocol layer header of the data packet from the UPF; and the processing module 601 is configured to generate the PCC rule based on the second information.

In an instance, when the communication apparatus is used as an SMF or a chip used in the SMF, and performs steps performed by the SMF or the SMF in the foregoing method embodiments, the transceiver module 602 is configured to support communication with a RAN, the SMF, an AS, and the like. The transceiver module specifically performs a sending and/or receiving action performed by the SMF or the SMF in the method in any one of the foregoing method embodiments, for example, supports the SMF in performing another process described in this specification. The processing module 601 may be configured to support the communication apparatus 600 in performing an action other than sending and receiving that is performed by the SMF or the SMF in the foregoing method embodiments, for example, support the SMF in performing another process of the technology described in this specification.

Specifically, the transceiver module 602 is configured to receive a PCC rule from a PCF, where the PCC rule indicates the RAN to determine redundancy of a PDU set based on a first protocol layer header of a data packet from the UPF; and the processing module 601 is configured to send first indication information according to the PCC rule, where the first indication information indicates the RAN to determine the redundancy of the PDU set based on the first protocol layer header of the data packet from the UPF.

In a possible implementation, the PCC rule further indicates the UPF to add first information to a first protocol layer header of a data packet from the AS, where the first information includes an identifier of a type of the data packet, and the type of the data packet includes an original data packet and/or a redundant data packet; or the first information includes redundancy of a PDU set to which the data packet belongs; or the first information includes a type of the PDU set to which the data packet belongs; or the first information is a QoS identifier.

In a possible implementation, that the PCC rule indicates the UPF to add first information to a first protocol layer header of a data packet from the AS includes: The PCC rule indicates the UPF to add the first information to the first protocol layer header of the data packet based on a second protocol layer header of a data packet from the AS.

In a possible implementation, the transceiver module 602 is further configured to send second indication information according to the PCC rule, where the second indication information indicates the UPF to add the first information to the first protocol layer header of the data packet from the AS.

In a possible implementation, that the second indication information indicates the UPF to add the first information to the first protocol layer header of the data packet from the AS includes: The second indication information indicates the UPF to add the first information to the first protocol layer header of the data packet based on a second protocol layer header of a data packet from the AS.

In a possible implementation, when the RAN, the UPF, the PCF, or the SMF is a chip, the transceiver module 602 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 601 may be the processor. The processor may execute computer-executable instructions stored in the storage module, to cause the chip to perform the method in any one of the foregoing embodiments.

Further, the processor may include a controller, an arithmetic logic unit, and a register. For example, the controller is mainly responsible for instruction decoding, and sending a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computer machine (advanced RISC machine, ARM) architecture, a second processor (network processor, NP) architecture, or the like. The processor may be a single-core or multi-core processor.

The storage module may be a storage module, for example, a register or a cache, inside the chip. Alternatively, the storage module may be a storage module, for example, a ROM or another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

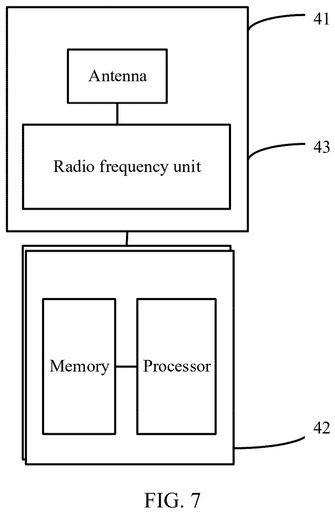

FIG. 7 is a diagram of a structure of a simplified RAN according to an embodiment of this application. The RAN includes a radio frequency signal receiving, sending, and conversion part and a baseband part 42. The radio frequency signal receiving, sending, and conversion part further includes a receiving module 41 and a sending module 43 (which may also be collectively referred to as a transceiver module). The radio frequency signal receiving, sending, and conversion part is mainly configured to receive and send radio frequency signals and perform conversion between a radio frequency signal and a baseband signal. The baseband part 42 is mainly configured to perform baseband processing, control the RAN, and the like. The receiving module 41 may also be referred to as a receiver, a receiving machine, a receiver circuit, or the like. The sending module 43 may also be referred to as a sender, a transmitter, a transmitting machine, a transmitter circuit, or the like. The baseband part 42 is usually a control center of the RAN, may also be referred to as a processing module, and is configured to perform steps performed by the RAN in any one of the foregoing methods. For details, refer to the foregoing descriptions of the related parts.

The baseband part 42 may include one or more boards. Each board may include one or more processors and one or more memories. The processor is configured to read and execute a program in the memory, to implement a baseband processing function and control the RAN. If there are a plurality of boards, the boards may be interconnected to improve a processing capability. In an optional implementation, the plurality of boards may share one or more processors, or the plurality of boards share one or more memories, or the plurality of boards simultaneously share one or more processors.

For example, the sending module 43 is configured to perform functions of the RAN in any one of the foregoing methods.

An embodiment of this application provides a communication apparatus. The communication apparatus includes at least one processor and a memory. The memory is configured to store a computer program or instructions. The at least one processor is configured to execute the computer program or the instructions in the memory, so that the method corresponding to each device or network element in any one of the foregoing methods is performed.

An embodiment of this application provides a communication system. The communication system includes a RAN and a UPF. The RAN is configured to perform the method corresponding to the RAN in any one of the foregoing methods. The UPF is configured to perform the method corresponding to the UPF in any one of the foregoing methods. In a possible implementation, the communication system may further include a PCF and an SMF. The PCF is configured to perform the PCF method in any one of the foregoing methods. The SMF is configured to perform the method corresponding to the SMF in any one of the foregoing methods.

An embodiment of this application provides a computer-readable storage medium. The computer-readable storage medium stores computer instructions. When the computer instructions are executed, a computer is caused to perform the method in any one of the foregoing methods.

An embodiment of this application provides a computer program product. The computer program product includes computer program code. When the computer program code is run on a computer, the computer is caused to perform the method in any one of the foregoing methods.

An embodiment of this application provides a chip. The chip is coupled to a memory, and is configured to read and execute program instructions in the memory, so that an apparatus in which the chip is located implements the method in any one of the foregoing methods.

The foregoing units described as separate parts may or may not be physically separate, and parts displayed as units may or may not be physical units, may be located in one position, or may be distributed on a plurality of network units. A part or all of the units may be selected according to an actual requirement to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware or a software network element unit.

When implemented in the form of a software network element unit and sold or used as an independent product, the integrated unit may be stored in a computer-readable storage medium. Based on such an understanding, an essentially contributing part in the technical solutions of this application or all or a part of the technical solutions may be embodied in a form of a software product. The computer software product is stored in a storage medium and includes a plurality of instructions for instructing a computer device (which may be a personal computer, a terminal device, a cloud server, a network device, or the like) to perform all or a part of the steps of the method in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application.

Therefore, the protection scope of this application shall be subject to the protection scope of the claims.

## Claims

1. A communication method, comprising:
receiving, by an access network device, a plurality of data packets belonging to a protocol data unit set, wherein a first protocol layer header of at least one data packet in the plurality of data packets comprises first information, and the first information is for determining redundancy of the protocol data unit set by the access network device; and
sending, by the access network device, M data packets in the plurality of data packets, wherein M is determined based on the redundancy of the protocol data unit set.

2. The method according to claim 1, wherein the first information comprises an identifier of a type of the data packet, and the type of the data packet comprises an original data packet and/or a redundant data packet; and the method further comprises:
determining, by the access network device, a quantity of redundant data packets in the protocol data unit set and a total quantity of the data packets in the protocol data unit set based on the first information comprised in the data packet in the protocol data unit set; and
determining, by the access network device, the redundancy of the protocol data unit set based on the quantity of redundant data packets in the protocol data unit set and the total quantity of the data packets in the protocol data unit set.

3. The method according to claim 1, wherein the first information is the redundancy of the protocol data unit set.

4. The method according to claim 1, wherein the method further comprises:
obtaining, by the access network device, a first correspondence between a type of the protocol data unit set and the redundancy of the protocol data unit set.

5. The method according to claim 4, wherein the first information comprises the type of the protocol data unit set; and the method further comprises:
determining, by the access network device, the redundancy of the protocol data unit set based on the first correspondence and the type of the protocol data unit set.

6. The method according to claim 1, wherein the method further comprises:
obtaining, by the access network device, a second correspondence between an identifier of a quality of service flow and the redundancy of the protocol data unit set.

7. The method according to claim 6, wherein the first information comprises the identifier of the quality of service flow; and the method further comprises:
determining, by the access network device, the redundancy of the protocol data unit set based on the second correspondence and the identifier of the quality of service flow.

8. The method according to any one of claims 1 to 7, wherein the method further comprises:
receiving, by the access network device, first indication information from a session management network element, wherein the first indication information indicates the access network device to determine the redundancy of the protocol data unit set based on a first protocol layer header of a data packet from a user plane network element.

9. The method according to any one of claims 1 to 8, wherein the method further comprises:
determining, by the access network device, configuration information of a data radio bearer based on the redundancy of the protocol data unit set, wherein the data radio bearer is for bearing the M data packets; and
sending, by the access network device, the M data packets comprises:
sending, by the access network device, the M data packets based on the configuration information of the data radio bearer.

10. The method according to any one of claims 1 to 8, wherein the method further comprises:
discarding, by the access network device, a data packet other than the M data packets in the protocol data unit set when the M data packets are successfully transmitted.

11. A communication method, comprising:
receiving, by a user plane network element, a plurality of data packets belonging to a protocol data unit set; and
adding, by the user plane network element, first information to a first protocol layer header of at least one data packet in the plurality of data packets, and sending the plurality of data packets to an access network device, wherein the first information is for determining redundancy of the protocol data unit set.

12. The method according to claim 11, wherein a second protocol layer header of at least one data packet in the plurality of data packets is for determining a type of the data packet, the type of the data packet comprises an original data packet and/or a redundant data packet, and the first information comprises an identifier of the type of the data packet.

13. The method according to claim 11, wherein a second protocol layer header of at least one data packet in the plurality of data packets is for determining a type of the protocol data unit set; and the method further comprises:
obtaining, by the user plane network element, a first correspondence between the type of the protocol data unit set and the redundancy of the protocol data unit set; and
determining, by the user plane network element, the redundancy of the protocol data unit set based on the first correspondence and the type of the protocol data unit set.

14. The method according to claim 13, wherein the first information is the redundancy of the protocol data unit set.

15. The method according to claim 13, wherein the first information comprises an identifier of a quality of service flow; and the method further comprises:
obtaining, by the user plane network element, a second correspondence between the identifier of the quality of service flow and the redundancy of the protocol data unit set; and
determining, by the user plane network element, the identifier of the quality of service flow based on the second correspondence and the redundancy of the protocol data unit set.

16. The method according to claim 11, wherein a second protocol layer header of at least one data packet in the plurality of data packets is for determining a type of the protocol data unit set, and the first information comprises the type of the protocol data unit set.

17. The method according to any one of claims 11 to 16, wherein the method further comprises:
receiving, by the user plane network element, second indication information from a session management network element, wherein the second indication information indicates the user plane network element to add the first information to a first protocol layer header of a data packet from an application server.

18. The method according to claim 17, wherein that the second indication information indicates the user plane network element to add the first information to the first protocol layer header of the data packet from the application server comprises:
the second indication information indicates the user plane network element to add the first information to the first protocol layer header of the data packet based on a second protocol layer header of a data packet from the application server.

19. A communication method, comprising:
generating, by a policy control network element, a policy and charging control rule, wherein the policy and charging control rule indicates an access network device to determine redundancy of a protocol data unit set based on a first protocol layer header of a data packet from a user plane network element; and
sending, by the policy control network element, the policy and charging control rule to a session management network element.

20. The method according to claim 19, wherein the policy and charging control rule further indicates the user plane network element to add first information to a first protocol layer header of a data packet from an application server, wherein
the first information comprises an identifier of a type of the data packet, and the type of the data packet comprises an original data packet and/or a redundant data packet; or
the first information comprises redundancy of a protocol data unit set to which the data packet belongs; or
the first information comprises a type of a protocol data unit set to which the data packet belongs; or
the first information is an identifier of a quality of service flow.

21. The method according to claim 19 or 20, wherein that the policy and charging control rule indicates the user plane network element to add the first information to the first protocol layer header of the data packet from the application server comprises:
the policy and charging control rule indicates the user plane network element to add the first information to the first protocol layer header of the data packet based on a second protocol layer header of a data packet from the application server.

22. The method according to any one of claims 19 to 21, wherein generating, by the policy control network element, the policy and charging control rule comprises:
receiving, by the policy control network element, second information from an application function network element, wherein the second information indicates the access network device to determine the redundancy of the protocol data unit set based on the first protocol layer header of the data packet from the user plane network element; and
generating, by the policy control network element, the policy and charging control rule based on the second information.

23. A communication method, comprising:
receiving, by a user plane network element, a plurality of data packets belonging to a protocol data unit set;
adding, by the user plane network element, first information to a first protocol layer header of at least one data packet in the plurality of data packets, and sending the plurality of data packets to an access network device, wherein the first information is for determining redundancy of the protocol data unit set; and
sending, by the access network device, M data packets in the plurality of data packets, wherein M is determined based on the redundancy of the protocol data unit set.

24. The method according to claim 23, wherein the first information comprises an identifier of a type of the data packet, and the type of the data packet comprises an original data packet and/or a redundant data packet; and the method further comprises:
determining, by the access network device, a quantity of redundant data packets in the protocol data unit set and a total quantity of the data packets in the protocol data unit set based on the first information comprised in the data packet in the protocol data unit set; and
determining, by the access network device, the redundancy of the protocol data unit set based on the quantity of redundant data packets in the protocol data unit set and the total quantity of the data packets in the protocol data unit set.

25. The method according to claim 23, wherein a second protocol layer header of at least one data packet in the plurality of data packets is for determining a type of the protocol data unit set; and the method further comprises:
obtaining, by the user plane network element, a first correspondence between the type of the protocol data unit set and the redundancy of the protocol data unit set; and
determining, by the user plane network element, the redundancy of the protocol data unit set based on the first correspondence and the type of the protocol data unit set.

26. The method according to claim 25, wherein the first information is the redundancy of the protocol data unit set.

27. The method according to claim 23, wherein the first information comprises an identifier of a quality of service flow; and the method further comprises:
obtaining, by the user plane network element, a second correspondence between the identifier of the quality of service flow and the redundancy of the protocol data unit set; and
determining, by the user plane network element, the identifier of the quality of service flow based on the second correspondence and the redundancy of the protocol data unit set.

28. The method according to claim 23, wherein the method further comprises:
obtaining, by the access network device, a second correspondence between an identifier of a quality of service flow and the redundancy of the protocol data unit set.

29. The method according to claim 28, wherein the first information comprises the identifier of the quality of service flow; and the method further comprises:
determining, by the access network device, the redundancy of the protocol data unit set based on the second correspondence and the identifier of the quality of service flow.

30. The method according to claim 27, wherein a second protocol layer header of at least one data packet in the plurality of data packets is for determining a type of the protocol data unit set, and the first information comprises the type of the protocol data unit set.

31. The method according to claim 23, wherein the method further comprises:
obtaining, by the access network device, a first correspondence between a type of the protocol data unit set and the redundancy of the protocol data unit set.

32. The method according to claim 31, wherein the first information comprises the type of the protocol data unit set; and the method further comprises:
determining, by the access network device, the redundancy of the protocol data unit set based on the first correspondence and the type of the protocol data unit set.

33. The method according to any one of claims 23 to 32, wherein the method further comprises:
receiving, by the access network device, first indication information from a session management network element, wherein the first indication information indicates the access network device to determine the redundancy of the protocol data unit set based on a first protocol layer header of a data packet from the user plane network element.

34. The method according to any one of claims 23 to 33, wherein the method further comprises:
determining, by the access network device, configuration information of a data radio bearer based on the redundancy of the protocol data unit set, wherein the data radio bearer is for bearing the M data packets; and
sending, by the access network device, the M data packets comprises:
sending, by the access network device, the M data packets based on the configuration information of the data radio bearer.

35. The method according to any one of claims 23 to 33, wherein the method further comprises:
discarding, by the access network device, a data packet other than the M data packets in the protocol data unit set when the M data packets are successfully transmitted.

36. The method according to any one of claims 23 to 35, wherein the method further comprises:
receiving, by the user plane network element, second indication information from the session management network element, wherein the second indication information indicates the user plane network element to add the first information to a first protocol layer header of a data packet from an application server.

37. The method according to claim 36, wherein that the second indication information indicates the user plane network element to add the first information to the first protocol layer header of the data packet from the application server comprises:
the second indication information indicates the user plane network element to add the first information to the first protocol layer header of the data packet based on a second protocol layer header of a data packet from the application server.

38. A communication apparatus, wherein the communication apparatus comprises a module configured to perform the method according to any one of claims 1 to 37.

39. A communication apparatus, comprising a processor, wherein the processor is coupled to a memory, and the memory stores a computer program; and the processor is configured to invoke the computer program in the memory, to cause the communication apparatus to perform the method according to any one of claims 1 to 37.

40. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 37 by using a logic circuit or by executing code instructions.

41. A computer-readable storage medium, wherein the storage medium stores a computer program or instructions, and when the computer program or the instructions are executed by a computer, the method according to any one of claims 1 to 37 is implemented.

42. A computer program product, wherein when a computer reads and executes the computer program product, the computer is caused to perform the method according to any one of claims 1 to 37.

43. A communication system, comprising an access network device configured to perform the method according to any one of claims 1 to 10 and a user plane network element configured to perform the method according to any one of claims 11 to 18.

44. The system according to claim 43, wherein the system further comprises a policy control network element configured to perform the method according to any one of claims 19 to 22.
